(19) Europäisches Patentamt
European Patent Office
Office européen des brevets

(11) **EP 3 182 691 B1**

(12) **EUROPEAN PATENT SPECIFICATION**

(45) Date of publication and mention
of the grant of the patent:
**31.10.2018 Bulletin 2018/44**

(51) Int Cl.:
***H04N 1/60*** *(2006.01)*     ***H04N 1/64*** *(2006.01)*
***H04N 19/46*** *(2014.01)*     ***H04N 9/67*** *(2006.01)*

(21) Application number: **15307040.4**

(22) Date of filing: **17.12.2015**

(54) **METHOD OF ENCODING RAW COLOR COORDINATES PROVIDED BY A CAMERA REPRESENTING COLORS OF A SCENE HAVING TWO DIFFERENT ILLUMINATIONS**

VERFAHREN ZUR CODIERUNG VON DURCH EINE KAMERA BEREITGESTELLTEN ORIGINALFARBKOORDINATEN ZUR DARSTELLUNG DER FARBEN EINER SZENE MIT ZWEI VERSCHIEDENEN BELEUCHTUNGEN

PROCÉDÉ DE CODAGE DE COORDONNÉES DE COULEURS BRUTES FOURNIES PAR UNE CAMÉRA REPRÉSENTANT LES COULEURS D'UNE SCÈNE COMPORTANT DEUX ÉCLAIRAGES DIFFÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2017 Bulletin 2017/25**

(73) Proprietor: **Thomson Licensing
92130 Issy-les-Moulineaux (FR)**

(72) Inventors:
• **STAUDER, Jurgen
35576 CESSON-SÉVIGNÉ (FR)**
• **REINHARD, Erik
35576 CESSON-SÉVIGNÉ (FR)**
• **MORVAN, Patrick
35576 CESSON-SÉVIGNÉ (FR)**

(74) Representative: **Vidon Brevets & Stratégie
16B, rue de Jouanet
BP 90333
35703 Rennes Cedex 7 (FR)**

(56) References cited:
**WO-A1-2015/007505     US-A1- 2005 213 128
US-A1- 2015 071 361     US-B1- 8 248 486**

EP 3 182 691 B1

**Description**

Technical Field

The invention relates to the encoding of colors of images having at least two different whites, one of those being related to a far brighter part of the image. The invention addresses notably images having a peak-white and a diffuse-white, wherein the part of the image illuminated by the peak-white is far brighter that the part of the image illuminated by the diffuse-white. Such images are notably high dynamic range images.

Background Art

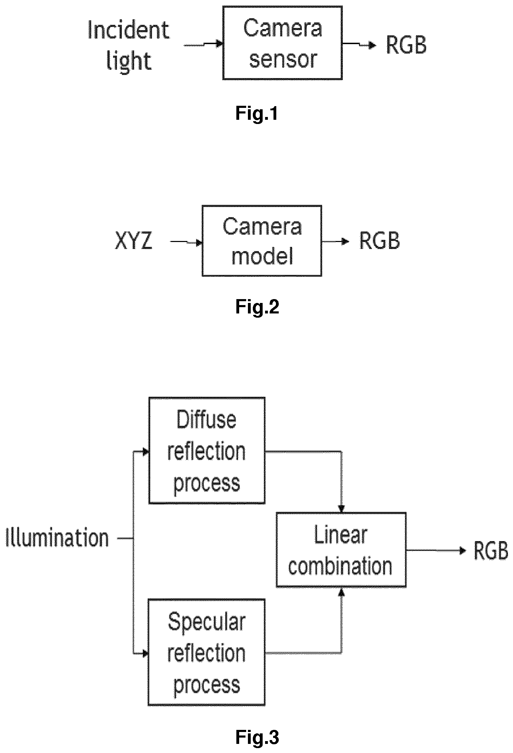

As shown on figure 1, a camera transforms the spectral light stimulus of each color of a scene captured by this camera into raw color coordinates representing this color in the raw color space of this camera. More precisely, during the capture of this color, the light spectrum of this color is weighted by color filters integrated in the camera sensor, resulting into raw color coordinates $R_{RAW}$, $G_{RAW}$, $B_{RAW}$, respectively for red, green and blue channel outputted by this camera. The raw color space in which these colors are represented by raw color coordinates $R_{RAW}$, $G_{RAW}$, $B_{RAW}$ is notably defined by "raw" color primaries of this camera, which are notably defined by the spectral transmittance of its colors filters.

Such a transformation of the spectral light stimulus into raw color coordinates is in general not invertible, however, the simplified photometric model according to figure 2 is invertible and often even linear. In this photometric model, a forward camera model is defined to transform the XYZ color coordinates representing a scene color - corresponding to incident light - in a photometric color space of a standard human observer into raw color coordinates $R_{RAW}$, $G_{RAW}$, $B_{RAW}$ representing the same color in the device-dependent raw color space of the camera. If such a camera model is linear, it can generally be represented by a matrix, and is generally invertible into an inverse camera model.

J. Stauder et al stated in their paper entitled "Extension of colour gamut in digital acquisition and colour correction" published at the Conference for Visual Media Production on November 12-13, 2009 that such a linear camera model is nearly always an approximation, due to the metamerism between the spectral sensitivity of the human observer model in CIEXYZ 1931 - the input of the camera model - and the spectral characteristics of the camera filters that finally give raise to the $R_{RAW}$, $G_{RAW}$, $B_{RAW}$ raw camera outputs - and being the output of the camera model. Only if the link between human spectral sensitivities and spectral camera filter characteristics satisfy the Luther condition, the linear camera model can be considered as exact.

Raw color coordinates $R_{RAW}$, $G_{RAW}$, $B_{RAW}$ outputted by a camera needs generally to be encoded such that the number of color data required to store or to transmit an image is significantly reduced.

Such an encoding generally involves a "white balance" operation in which raw color coordinates $R_{RAW}$, $G_{RAW}$, $B_{RAW}$ representing colors in the raw device-dependent color space of the camera are linearly transformed into R'G'B' white-balanced colors coordinates representing the same colors in another device-dependent color space having three specific primary colors, which are generally different from the "raw" primary colors of the raw device-dependent color space of the camera. Such an encoding process is generally named "white-balance" operation when the chromaticity defined by the equal combination of these three specific primary colors corresponds to the chromaticity of a color selected in the image as a white color. For such a linear transformation, a matrix is generally used. It is well known that the light illuminating a scene and reflected from a dominant white object in this scene creates what artists and video operators call "the white" in an image. For example, this white may correspond to a bright wall illuminated by the sun. In a raw image of this scene provided by a camera the colors of which are represented by raw color coordinates $R_{RAW}$, $G_{RAW}$, $B_{RAW}$, the triplet of raw coordinate values Rw,Gw,Bw that corresponds to this bright wall in the scene could be interpreted by this camera as color coordinates of the white of the scene. It is also well known how cameras can estimate this white Rw,Gw,Bw triplet and can white balance the raw color coordinates $R_{RAW}$, $G_{RAW}$, $B_{RAW}$, in order to normalize these raw color coordinates $R_{RAW}$, $G_{RAW}$, $B_{RAW}$ to this white triplet Rw,Gw,Bw, resulting in white-balanced color coordinates R',G',B'. For example, when color coordinates are quantized to 8 bit, the normalized triplet R'=G'=B'=255 then corresponds to this white triplet Rw,Gw,Bw. Instead, the white of the scene may also be predetermined. For example in HDTV, cameras are generally calibrated to the white D65 standardized by the CIE. In this case, the triplet R'=G'=B'=255 corresponds to X,Y,Z such as shown in figure 2 that correspond to D65.

Through the above white balance operation, digital values (for instance comprised between 0 to 255) distributed over each of the color channels corresponding to the raw primary colors are redistributed over new color channels corresponding to the new primary colors.

After such a redistribution, in each new color channel, color coordinates are usually gammatized, notably to take into account eye sensitivity functions, and a quantization is applied to these gammatized color coordinates. It means that white-balanced color coordinates values R',G',B' are generally transformed in compressed or expanded range before quantization. For example, in the field of image display, television systems apply generally well known gamma or EOTF functions in order to compress color coordinates values within a more limited range before quantization. In case of images with high dynamic range, the range of luminance in an image is higher than in images with standard dynamic range. Color encoding and succeeding quantization should consider this fact in order to not introduce color quantization errors. Generally, color balancing and gammatization are adapted to apply a coarser quantization (i.e. requiring less numerous color data) without introducing visible color quantization errors.

Color encoding is then the process of generating well-defined, color balanced, gammatized and quantized color coordinates to represent colors of an image. For example, a camera outputs Y,Cb,Cr coordinates to represent colors of a scene captured by this camera or a scanner outputs gammatized IEC 61966-2-1 "sRGB" coordinates to represent colors of an image scanned by this scanner. Such a color encoding generally implies white balancing as explained above.

The invention concerns the encoding of colors of an image or video when there are more than one white in this image or video. When there is more than a single white in the scene or image to capture, using classical white balancing will generate white-balanced color coordinates R',G',B' that are not optimal for quantization. The dichromatic reflection model using a linear combination as depicted on figure 3 might be useful to understand what are the two whites in case of diffuse and specular reflection, but the model does not indicate how to encode the code values $R_{RAW}$, $G_{RAW}$, $B_{RAW}$ provided by the color capture device into R',G',B' representing the captured colors in color coordinates that are optimal for quantization.

The presence of more than one white may come from two light sources illuminating different parts of the scene to capture and generating two different bright colors - considered as "whites" - on different white objects situated in these different parts of the scene. A first case illustrating several whites is a scene comprising an indoor part illuminated by artificial illumination and an outdoor part illuminated by the sun, shown for instance through a window in this scene. A second case illustrating several whites is a scene comprising white objects the surface of which comprises specular reflective part and diffuse reflective part. For example, a scene in which the sun illuminates a glossy white car, where parts of the white surface show diffuse reflection and so-called **diffuse white** while other parts of the surface - depending on the surface normal - show directly reflected sun light, so-called **peak white**. Notably this second case gave recently rise to High Dynamic Range (HDR) imaging. Peak white has usually very high luminance that can be captured and represented by HDR imaging. Peak white has often different hue and/or different saturation when compared to diffuse white.

It is known that the presence of two different illuminations in a scene and/or of two different white reflection processes can be modeled by linear superposition. For example Yang et al. use in their paper entitled "Separating Specular and Diffuse Reflection Components in the HSI Color Space" published 2013 at the IEEE Computer Vision Workshops (ICCVW) the well-known dichromatic reflection model, see figure 3. The goal of the authors is to estimate the color and intensity of both reflections components given the raw color coordinates $R_{RAW}$, $G_{RAW}$, $B_{RAW}$ of colors of a scene provided by a camera capturing this scene.

In summary, this invention addresses the problem of encoding colors of images imaging scenes having more than one white, a first white of high luminance/brightness as for instance a peak white and at least a second white of lower luminance/brightness as for instance a diffuse white.

The patent application US2005/213128 discloses a method of encoding colors of an image of a scene illuminated by different illuminations such as sunlight, incandescent or fluorescent light, and performs color correction by converting into the XYZ device independent color space using a conversion matrix corresponding to each identified dominant illuminant in the scene.

The patent application US2014/184765 proposes a solution to such a problem of color encoding by switching on one of a set of different available white balancing modules. However, this solution has the disadvantage that, after selection, the classical well-known white balancing based on a single white is applied. The result is not adapted to multiple whites for the same part of an image, for instance for a same pixel.

The patent application US2011/122284 proposes a solution to the problem of color encoding in a multi-white situation. In this solution, as many white balanced images as there are whites to consider are generated, each image being white balanced according to one of these whites. Then, these different white-balanced images are averaged using a weight for each image, while the sum of weights is one. The result is a single image having averaged color coordinates. Notably, the weights can be spatially varying such that indoor and outdoor parts of the image can be white balanced differently. In this method, each pixel is assigned a specific weighted white.

When a camera captures a real scene in the real world, some of the raw color channels of the camera may saturate for high scene luminance. This might be the case for example for bright objects, objects with specular reflection or light sources. Recent cameras as HDR cameras are able to capture more and wider dynamic range. It is known that reproduction of a large range of colors such as highly saturated colors or colors with high dynamic range is difficult on color display devices that are available today on the market. For example, the patent WO2005/022442 entitled "Color descriptor data structure" proposes a description of a display that is able to reproduce the diffuse white present in an image but not able to reproduce a peak white present in an image. Known solutions to reproduce these colors are gamut mapping and tone mapping.

This invention addresses also the problem of color encoding of colors of images imaging scenes having high dynamic range. In general, white balancing such as proposed by US2011/122284 is one way of encoding colors. The invention proposes another way, where each pixel is assigned a specific illumination situation.

More generally, a color encoding should lead to as few artifacts as possible even with a coarser quantization and aims at the two following conditions. A first condition aims at a good quantization of color coordinates values representing colors, i.e. for good compression of these data : the distance between two neighboring colors having the closest color coordinates according to the quantization (i.e. corresponding to one lower bit of this quantization) should be best below the threshold of perception of the human eye. A second condition is that the color encoding should not lead to quantized color coordinates requiring a large amount of memory space. To meet the second condition, the totality of colors corresponding to all possible combinations of quantized color coordinates, also called code words, should preferably give a color gamut that is closest to the color gamut of the scene colors.

Summary of invention

It is proposed an encoding method of colors that can fulfill these conditions in a specific situation of a scene having a first illumination of high luminance and a second illumination of lower luminance, notably for a situation of peak and diffuse illuminations. As described below, this method exploits notably the luminance of these colors.

A subject of the invention is a method of encoding colors of an image of a scene into encoded colors, wherein said scene has at least two different illuminations including a first illumination of high luminance and a second illumination of lower luminance, said method comprising, for each of said colors:

- applying to three color coordinates representing said color in a device independent color space the inverse of a first linear model modelling a first virtual display device corresponding to the first illuminant, resulting in a first set of device-dependent color coordinates,
- applying to the three color coordinates representing said color in said device independent color space the inverse of a second linear model modelling a second virtual display device corresponding to the second illuminant, resulting in a second set of device-dependent color coordinates,
- computing a third set of device-dependent color coordinates by linearly combining said first set of device-dependent color coordinates with a first weight and said second set of device-dependent color coordinates with a second weight, wherein said first weight is proportional to the luminance of said color.

Preferably, this proportionality is linear.

The device independent color space is for example in the CIE-XYZ color space.

The luminance of said color corresponds to one of - or can be derived by known methods from - said color coordinates representing said color in the device independent color space.

Said first set of device-dependent color coordinates represents said color in the color space of said first virtual display device.

Said second set of device-dependent color coordinates represents said color in the color space of said second virtual display device.

According to a first variant, said first virtual display device is defined as having a first white and a first set of primaries, said first white and said primaries corresponding to colors reflected by objects of said scene under said first illumination, and said second virtual display device is defined as having a second white and a second set of primaries, said second white and said primaries corresponding to colors reflected by objects of said scene under said second illumination.

Globally, the method of encoding is then based on a linear combination of a first encoding of each color based on a first virtual display device notably defined by a first white and a first set of primaries corresponding to colors reflected from the scene under the illumination with the high luminance, and of a second encoding based on a second virtual display device notably defined by a second white and a second set of primaries corresponding to colors reflected from the scene under the illumination with the lower luminance, wherein the weight assigned to the first encoding is proportional to the luminance of said color.

According to a second variant, said first virtual display device is defined such that its color gamut includes most colors of the scene under the first illumination with some of these colors limiting this color gamut, and wherein said second virtual display device is defined such that its color gamut includes most colors of the scene under the second illumination, with some of these colors limiting this color gamut.

Preferably, the sum of the first weight and of the second weight is equal to 1.

Preferably, each of said colors is captured by a camera as a set of camera-dependent color coordinates, and, in the method, the three color coordinates representing each of said colors in the device-independent color space are obtained by applying to said camera-dependent color coordinates the inverse of a model modelling said camera.

Preferably, the method comprises varying the range of values of said device-dependent color coordinates of said third set and then data compressing said values.

For varying the range of values, gamma or EOTF functions can be used. When colors are captured by a camera, the EOTF function of the camera is preferably used. Data compression is preferably performed using any image or video compression standard.

Preferably, the ratio of said high luminance of the first illumination over said lower luminance of the second illumination is superior to 100.

Preferably, said first illumination corresponds to a peak illumination and wherein said second illumination corresponds to a diffuse illumination.

A subject of the invention is also a method of decoding encoded colors coordinates representing colors of an image of a scene into decoded colors coordinates representing the same colors in a device independent color space, wherein said scene has at least two different illuminations including a first illumination of high luminance and a second illumination of lower luminance, said method comprising, for each of said colors, main computing said decoded colors coordinates from an equation stating that encoded colors coordinates are a linear combination:

- of a first set of device-dependent color coordinates with a first weight, which results from the application of the inverse of a first linear model modelling a first virtual display device corresponding to the first illuminant to said decoded colors coordinates, and
- of a second set of device-dependent color coordinates with a second weight, which results from the application of the inverse of a second linear model modelling a second virtual display device corresponding to the second illuminant to said decoded colors coordinates,

wherein said first weight is proportional to the luminance of said color.

Preferably, the sum of the first weight and of the second weight is equal to 1.

Preferably, this method comprises, before said computing, preliminary computing decoded colors coordinates using the same equation but in which the first weight is one and the second weight is zero, then applying main computing in which said luminance (Y) of said color results from preliminary computing.

A subject of the invention is also an encoder for encoding colors of an image of a scene into encoded colors, wherein said scene has at least two different illuminations including a first illumination of high luminance and a second illumination of lower luminance, said encoder comprising processing unit(s) configured for:

- applying to three color coordinates representing each of said colors in a device independent color space the inverse of a first linear model modelling a first virtual display device corresponding to the first illuminant, resulting in a first set of device-dependent color coordinates,
- applying to three color coordinates representing said color in said device independent color space the inverse of a second linear model modelling a second virtual display device corresponding to the second illuminant, resulting in a second set of device-dependent color coordinates,
- computing a third set of device-dependent color coordinates by linearly combining said first set of device-dependent color coordinates with a first weight and said second set of device-dependent color coordinates with a second weight, wherein said first weight is proportional to the luminance of said color.

A subject of the invention is also a computer readable storage medium comprising stored instructions that when executed by processing unit(s) performs the above method.

Brief description of drawings

The invention will be more clearly understood on reading the description which follows, given by way of non-limiting example and with reference to the appended figures in which:

- Figure 1 describes the basic function of a camera used to capture colors of images of a scene to encode according to the encoding method described on figure 4,
- Figure 2 depicts a modelization of the camera of figure 1, using a model Mc,
- Figure 3 illustrates a linear combination of white-balancing based on specular reflection and of white-balancing based on diffuse reflection, according to a classical dichromatic reflection model,
- Figure 4 illustrates an embodiment of the encoding method according to the invention,
- Figure 5 illustrates a system comprising notably a camera and an encoder to implement the encoding method illustrated on figure 4,
- Figure 6 illustrates a system comprising a decoder adapted to decode the color data provided by the system of figure 5.

Description of embodiments

It will be appreciated by those skilled in the art that flow charts presented herein represent conceptual views of illustrative circuitry embodying the invention. They may be substantially represented in computer readable media and so executed notably by processing units in a color encoder, whether or not such processor is explicitly shown.

The functions of the various elements shown in the figures may be provided through the use of dedicated hardware as well as hardware capable of executing software in association with appropriate software.

The software may be implemented as an application program tangibly embodied on a program storage unit included in the color encoder. The application program may be uploaded to, and executed by, a computer platform comprising any suitable architecture and including processing units. Preferably, the computer platform has hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as a display device and an additional data storage unit.

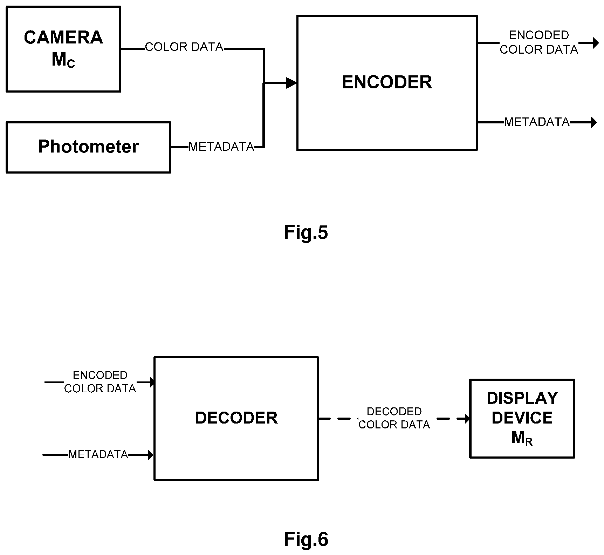

The color encoder may be included in a camera. If the color encoder is a separate unit, it is connected to a camera through an input/output interface as shown on figure 5.

The camera is configured to capture images of a scene from incident light impinging the sensor of this camera, and to deliver raw color coordinates R,G,B representing colors of this scene in the raw color space of this camera, see figure 1.

The encoder is configured to encode these raw color coordinates R,G,B into encoded color coordinates R',G',B' in a specific situation in which this scene has at least two different illuminations including a first illumination of high luminance, notably a peak illumination, and a second illumination of lower luminance, notably a diffuse illumination.

In a first variant, a first virtual display device is defined such that its color gamut includes most colors of the scene under the first, peak illumination, with some of these colors limiting this color gamut, and a second virtual display device is defined such that its color gamut includes most colors of the scene under the second, diffuse illumination, with some of these colors limiting this color gamut. In a second variant, the first virtual display device is defined as having a first white (peak white) and a first set of primary colors, also called primaries including generally a red, green and blue primaries, wherein the colors reproduced by this first virtual display device correspond to colors reflected by objects of the scene under the first peak illumination, and the second virtual display device is defined as having a second white (diffuse white) and a second set of primaries including generally a red, green and blue primaries, where the colors reproduced by this second virtual display device correspond to colors reflected by objects of the scene under the second diffuse illumination. A method of obtaining these whites and these sets of primaries from photometric measurements of the scene is described below.

In both variants,

- most colors of the scene under the first peak illumination can be generated by the first virtual display device;
- most colors of the scene under the second diffuse illumination can be generated by the second virtual display device.

In both variants, the first virtual display device is modeled by a matrix $M_p$ and the second virtual display device is modeled by a matrix $M_d$. These matrices $M_p$ and $M_d$ can be transmitted as metadata to the encoder with the raw color coordinates R,G,B provided by the camera.

Instead of transmitting these matrices to the encoder, the first white (peak white) and the first set of primaries can be transmitted to the encoder as metadata, and the matrix $M_p$ is computed for instance as described below by processing units of the encoder, and the second white (diffuse white) and the second set of primaries can be transmitted to the encoder as metadata, and the matrix $M_d$ is similarly computed by processing units of the encoder.

Based on these metadata transmitted to the encoder, a display model computing module using processing units of the encoder can for instance compute the matrices $M_p$ and $M_d$ as follows:

$$Q_p = \begin{bmatrix} X_{p,R} & X_{p,G} & X_{p,B} \\ Y_{p,R} & Y_{p,G} & Y_{p,B} \\ Z_{p,R} & Z_{p,G} & Z_{p,B} \end{bmatrix}, \qquad W_p = \begin{bmatrix} w_{p,R} & 0 & 0 \\ 0 & w_{p,G} & 0 \\ 0 & 0 & w_{p,B} \end{bmatrix},$$

1/ $\quad M_p = [Q_P W_p]^{-1} \quad$ with

$$\begin{bmatrix} w_{p,R} \\ w_{p,G} \\ w_{p,B} \end{bmatrix} = Q_p^{-1} \begin{bmatrix} x_{p,W}/y_{p,W} \\ 1 \\ z_{p,W}/y_{p,W} \end{bmatrix}$$ and $z_{p,W} = 1 - x_{p,W} - y_{p,W}$

where $x_{p,W}$, $y_{p,W}$ are the chromaticity coordinates of the first white (peak white) in the xy chromaticity space of the CIE and $X_{p,R}$, $Y_{p,R}$, $Z_{p,R}$, $X_{p,G}$, $Y_{p,G}$, $Z_{p,G}$ and $X_{p,B}$, $Y_{p,B}$, $Z_{p,B}$ form the first set of primaries, here a red, a green and a blue primary represented by their color coordinates in the CIE-XYZ color space. This white and these red, green and blue primaries correspond to colors reflected by respectively a white, red, green and blue object of the scene under the first peak illumination.

$$Q_d = \begin{bmatrix} X_{d,R} & X_{d,G} & X_{d,B} \\ Y_{d,R} & Y_{d,G} & Y_{d,B} \\ Z_{d,R} & Z_{d,G} & Z_{d,B} \end{bmatrix} \quad , \qquad W_d = \begin{bmatrix} w_{d,R} & 0 & 0 \\ 0 & w_{d,G} & 0 \\ 0 & 0 & w_{d,B} \end{bmatrix} \quad ,$$

**2/** $\quad M_d \quad = \quad [Q_d W_d]^{-1} \quad$ with

$$\begin{bmatrix} w_{d,R} \\ w_{d,G} \\ w_{d,B} \end{bmatrix} = Q_d^{-1} \begin{bmatrix} x_{d,W}/y_{d,W} \\ 1 \\ z_{d,W}/y_{d,W} \end{bmatrix}$$ and $z_{d,W} = 1 - x_{d,W} - y_{d,W}$

where $x_{d,W}$, $y_{d,W}$ are the chromaticity coordinates of the second white (diffuse white) in the xy chromaticity space of the CIE and $X_{d,R}$, $Y_{d,R}$, $Z_{d,R}$, $X_{d,G}$, $Y_{d,G}$, $Z_{d,G}$ and $X_{d,B}$, $Y_{d,B}$, $Z_{d,B}$ form the second set of primaries, here a red, a green and a blue primary represented by their color coordinates in the CIE-XYZ color space. These white, red, green and blue primaries correspond to colors reflected by respectively a white, red, green and blue object of the scene under the second diffuse illumination.

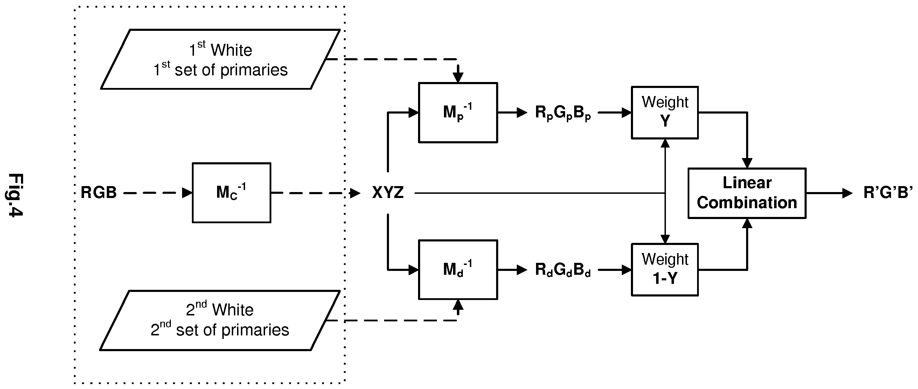

Such a computing method above is similar to SMPTE RP 177. This computing method is illustrated in dotted lines on figure 4.

Note that the chromaticities of the peak illumination $x_{p,W}$, $y_{p,W}$ and the first set of primaries defining the first virtual display device can be for instance measured using a photometer as shown on figure 5 and as described below.

For example, when a light engineer is setting the scene for the capture of images of this scene using the camera, he may for instance switch on the peak illumination of this scene and switch off (or reduce strongly) the diffuse illumination . Then, he will first measure the chromaticities $x_{p,W}$, $y_{p,W}$ of the peak white, based for instance on the light reflected by an object of the scene that he considers as typical white object of the scene illuminated by the peak white. For this measurement, he may for example chose some paper or a white wall in the scene. Then, he will chose typical red, green and blue objects in the scene, then, using the photometer, measure the XYZ coordinates of the light reflected from the red object(s) to get the red peak primary $X_{p,R}$, $Y_{p,R}$, $Z_{p,R}$, measure the XYZ coordinates of the light reflected from the green object(s) to get the green peak primary $X_{p,G}$, $Y_{p,G}$, $Z_{p,G}$, and measure the XYZ coordinates of the light reflected from the blue object(s) to get the blue peak primary $X_{p,B}$, $Y_{p,B}$, $Z_{p,B}$. Another possibility to get these peak primary colors is to measure more than three different colors in the scene and to fit mathematically the gamut of a virtual, linear, additive "peak-based" display to the measured colors. The primary colors of this fitted "peak-based" display will then be considered as the primary colors of the peak illumination.

Similarly, the chromaticities $x_{d,W}$, $y_{d,W}$ of diffuse illumination and the second set of primaries defining the second virtual display device can be for instance measured using a photometer as shown on figure 5 and as described below.

For example, when a light engineer is setting the scene for the capture of images of this scene using the camera, he may for instance switch on the diffuse illumination of this scene and switch off (or strongly reduce) the peak illumination. Then, he will first measure the chromaticities $x_{d,W}$, $y_{d,W}$ of the diffuse white, based for instance on the light reflected by an object of the scene that he considers as typical white object of the scene illuminated by the diffuse white. For this measurement, he may for example chose some paper or a white wall in the scene. Then, he will chose typical red, green and blue objects in the scene, then, using the photometer, measure the XYZ coordinates of the light reflected from the red object(s) to get the red diffuse primary $X_{d,R}$, $Y_{d,R}$, $Z_{d,R}$, measure the XYZ coordinates of the light reflected from the green object(s) to get the green diffuse primary $X_{d,G}$, $Y_{d,G}$, $Z_{d,G}$, and measure the XYZ coordinates of the light reflected from the blue object(s) to get the blue diffuse primary $X_{d,B}$, $Y_{d,B}$, $Z_{d,B}$. Another possibility to get these diffuse primary colors is to measure more than three different colors in the scene and to fit mathematically the gamut of a virtual, linear, additive "diffuse-based" display to the measured colors. The primary colors of this fitted "diffuse-based" display will then be considered as the primary colors of the diffuse illumination.

The mentioned white, red, green and blue objects linked to the white and the primaries of any of the mentioned virtual displays may be absent in the scene that should be actually captured, notably when an operator place these objects (or only some of them) into the scene in order to analyse the scene colors and take them out of the scene before capture. Such objects are then used only to define the first and second virtual display devices. It might be that the mentioned white object is actually present in the actual scene to capture, but not the red, green and blue objects.

A main example of implementation of the encoding method will now be described in reference to figure 4.

Within an optional first step of encoding depicted on figure 2 and in dotted lines on figure 4, using a camera model $M_C$, raw color coordinates R,G,B representing colors of the image provided by the camera to the encoder are transformed to corresponding X,Y,Z color coordinates representing the same color but in the CIE XYZ color space. The camera model is notably configured to deliver normalized X,Y,Z coordinates in the range of [0,1].

Such a camera model may be for instance based on the optoelectronic conversion function (OECF) and on the spectral sensitivity functions of the camera. Given a certain amount of luminous energy falling on a particular pixel, the optoelectronic conversion function (OECF) returns a digital level in each raw color channel. Given a certain wavelength, the spectral sensitivity functions of the camera sensor gives the relative responses of the three raw color channels. This may all sound very simple, but, in an actual camera, the energy response (OECF) and the spectral sensitivity functions of a pixel are superimposed into a single pixel response. Therefore, in order to characterize the energy response and spectral sensitivity functions of a camera, one generally teases these two functions apart.

Measurements of such EOCF and spectral sensitivity functions - called there color matching functions - are illustrated for instance in the article entitled "Camera calibration for natural image studies and vision research" published in 2009 by Mark Brady et al. in Journal of Optical Society of America A Opt. Image Sci Vis Vol.26, pages 30-42. ISO 14524:2009 specifies methods for the measurement of opto-electronic conversion functions (OECFs) of electronic still-picture cameras whose output is digitally encoded. The OECF is defined as the relationship between the focal plane log exposures or scene log luminances, and the digital output levels of the electronic still-picture camera.

Instead of using a camera model based on optoelectronic conversion functions and spectral sensitivity functions as mentioned above, a linear colorimetric camera model can be interpolated notably by fitting a matrix $M_c$ to a set of test colors - specified by X,Y,Z color coordinates - with corresponding R,G,B raw color coordinates that would be output by the camera when capturing these test colors. Such a linear fitting can be obtained using well-known methods such as for example least squares method. The obtained matrix $M_C$ which models the camera allows to transform XYZ color coordinates into corresponding Raw R,G,B color coordinates as follows:

$$\begin{bmatrix} R \\ G \\ B \end{bmatrix} = M_C \begin{bmatrix} X \\ Y \\ Z \end{bmatrix}$$

$$\begin{bmatrix} X \\ Y \\ Z \end{bmatrix} = M_C^{-1} \begin{bmatrix} R \\ G \\ B \end{bmatrix}$$

The first, optional step of encoding can be then performed according to the equation:

Such a relationship between raw R,G,B color coordinates of a color provided by the camera and X,Y,Z color coordinates of this color in the scene captured by the camera can also be obtained experimentally using well known color calibration methods.

In a second step of encoding, these X,Y,Z color coordinates obtained for instance from the first step are encoded into a first set of so-called peak-white color coordinates $R_p, G_p, B_p$ , defined as follows using the inverse of the matrix $M_p$ modeling the first virtual display device:

$$\begin{bmatrix} R_p \\ G_p \\ B_p \end{bmatrix} = M_p^{-1} \begin{bmatrix} X \\ Y \\ Z \end{bmatrix}$$

Note that this first set of peak-white color coordinates $R_p, G_p, B_p$ would generate the color represented in the CIE color space by the X,Y,Z color coordinates when this first set is inputted into the first virtual, linear, additive display as defined above.

In a third step of encoding, the X,Y,Z color coordinates which are for instance obtained from the first step are encoded into a second set of diffuse-white color coordinates $R_d,G_d,B_d$, defined as follows using the inverse of the matrix

$$\begin{bmatrix} R_d \\ G_d \\ B_d \end{bmatrix} = M_d^{-1} \begin{bmatrix} X \\ Y \\ Z \end{bmatrix}$$

$M_d$ modeling the second virtual display device :

Note that this second set of diffuse-white color coordinates $R_d,G_d,B_d$ would generate the color represented in the CIE color space by the X,Y,Z color coordinates when this second set is inputted into the second virtual, linear, additive "diffuse-based" display as defined above.

In a fourth step of color encoding, the first set of peak-white color coordinates obtained by the second step above and the second set of diffuse-white color coordinates obtained by the third step above are linearly combined into a third set of encoded color coordinates R'G'B' using a color controlled weighting. More precisely, if device-dependent color coordinates of the first set are assigned a first weight and if device-dependent color coordinates of the second set are assigned a second weight, the first weight w is proportional to the luminance Y of the color. The specific weights are then assigned to each pixel of the image of the scene captured by the camera. Preferably, the sum of the first weight and of the second weight is equal to 1. An encoding of raw RGB color coordinates is then obtained. In other words, as illustrated on figure 4, the result of the first to fourth step is to transform the representation of the color associated with each pixel of the image provided by the camera from raw R,G,B color coordinates into corresponding encoded R'G'B' color coordinates which are notably based on a combination of two different whites, a peak white and a diffuse white.

According to the invention, the weight w specific to each pixel of the captured image is function of the luminance Y of the color associated with this pixel, this luminance Y corresponding to the second of the three X,Y,Z color coordinates representing the color associated with this pixel in the CIE-XYZ color space, as obtained from the first step above. In this embodiment, the weight w is then equal to Y: w = Y. The encoded color coordinates R',G',B' of this color are then calculated as follows:

$$\begin{pmatrix} R' \\ G' \\ B' \end{pmatrix} = w \begin{pmatrix} R_p \\ G_p \\ B_p \end{pmatrix} + (1-w) \begin{pmatrix} R_d \\ G_d \\ B_d \end{pmatrix}$$

The last processing steps of color encoding which are generally applied after the fourth step above, are quite usual and shortly described below.

First, encoded color coordinates values R',G',B' representing each color of the captured image are generally transformed in compressed or expanded range before quantization. For this purpose, well known gamma or electrical-optical transfer functions (EOTF) are generally applied to these color coordinates values in order to compress them within a more limited range before quantization. In case of a high dynamic range camera, the range of luminance is higher.

Second, after application of gamma or EOTF functions, the color coordinates values are generally data compressed using any standard of data compression, for instance JPEG standard.

The encoder then outputs compressed data representing the encoded colors associated with each pixel of the captured image.

Advantageously, due notably to the second to fourth steps of encoding above, the quantization of data - performed notably for data compression - is improved, leading to lower artifacts and lower amount of required memory space to store the data and/or lower required bandwidth to transmit these data.

## Decoding of encoded color coordinates

When receiving sets of encoded color coordinates R',G',B' representing colors of an image, the question is: how a decoder can decode these encoded color coordinates R',G',B' in order, for instance, to display this image on a display device?

It is supposed that these color coordinates R',G',B' are received or stored together with metadata describing matrices $M_p$ and $M_d$ modeling respectively a first and a second virtual display devices as defined above, or metadata allowing to compute such matrices, for instance as described above.

Figure 6 illustrates a system comprising such a decoder connected to a display device.

When color data related to this image are provided in a compressed format, for instance in JPEG format, these data are decompressed in a manner known per se. When these decompressed data are non-linear, they are linearized sed in a manner known per se, for instance through the application of a degammatization or EOTF function. Linear encoded color coordinates R'G'B' are then obtained, representing colors of the image in a linear device-dependent color space.

A decoding method of such sets of color coordinates R',G',B' will now be described that advantageously does need values of corresponding luminances that may have been used, as described above, to encode the colors.

First embodiment of decoding method

In a first step of this first embodiment, it is assumed that this illumination is diffuse and that peak illumination can be neglected. Therefore, the matrix $M_d$ modeling the second virtual display device (i.e. corresponding to the diffuse white) is applied to each set of encoded colors coordinates R',G',B' representing a color, as if this color should be displayed by this second virtual display device. A first set of corresponding color coordinates X1',Y1',Z1' representing the same color in the CIE-XYZ color space are then obtained:

$$\begin{bmatrix} X1'' \\ Y1'' \\ Z1'' \end{bmatrix} = M_d \begin{bmatrix} R' \\ G' \\ B' \end{bmatrix}$$

In a second step of this first embodiment, it is considered that the color coordinates R',G',B' have been encoded as described above, i.e. that they have been computed by linearly combining a set of device-dependent color coordinates based on the first virtual display device with a first weight w and a set of device-dependent color coordinates based on the second virtual display device with a second weight. In this step, we assume that the first weight w" is proportional to the luminance Y1" determined at the first step above.

Assuming that Y1" is normalized to unity, it means that we have the relationship:

$$\begin{pmatrix} R' \\ G' \\ B' \end{pmatrix} = w'' M^{-1}{}_p \begin{pmatrix} X2'' \\ Y2'' \\ Z2'' \end{pmatrix} + (1-w'') M^{-1}{}_d \begin{pmatrix} X2'' \\ Y2'' \\ Z2'' \end{pmatrix} \text{ with w'' = Y1''.}$$

leading to:

$$\begin{pmatrix} R' \\ G' \\ B' \end{pmatrix} = Y1'' M^{-1}{}_p \begin{pmatrix} X2'' \\ Y2'' \\ Z2'' \end{pmatrix} + (1-Y1'') M^{-1}{}_d \begin{pmatrix} X2'' \\ Y2'' \\ Z2'' \end{pmatrix} = \left[ Y1'' M^{-1}{}_p + (1-Y1'') M^{-1}{}_d \right] \begin{pmatrix} X2'' \\ Y2'' \\ Z2'' \end{pmatrix}$$

and finally to:

$$\begin{pmatrix} X2'' \\ Y2'' \\ Z2'' \end{pmatrix} = \left[ Y1'' M_p^{-1} + (1-Y1'') M_d^{-1} \right]^{-1} \begin{pmatrix} R' \\ G \\ B' \end{pmatrix}$$

At the end of this second step, a final set of decoded color coordinates X2",Y2",Z2" is obtained that represents the color in the CIE-XYZ color space. This set can be transformed in a usual manner as described above to control a display device such that this color is displayed on the screen of this device.

Second embodiment of decoding method

The first step of this second embodiment is the same as the first step of this first embodiment above.

The second step comprises a series of iterations as described below.

In a first iteration of this second step, the same equation as in the second step of the first embodiment above is used to compute a second set of decoded color coordinates X3",Y3",Z3" :

$$\begin{pmatrix} R' \\ G' \\ B' \end{pmatrix} = w'' M^{-1}{}_p \begin{pmatrix} X3'' \\ Y3'' \\ Z3'' \end{pmatrix} + (1-w'') M^{-1}{}_d \begin{pmatrix} X3'' \\ Y3'' \\ Z3'' \end{pmatrix}$$

Then, it is assumed that w"=Y3". The above equation then becomes:

$$\begin{pmatrix} R' \\ G' \\ B' \end{pmatrix} = Y3'' M^{-1}{}_p \begin{pmatrix} X3'' \\ Y3'' \\ Z3'' \end{pmatrix} + (1-Y3'') M^{-1}{}_d \begin{pmatrix} X3'' \\ Y3'' \\ Z3'' \end{pmatrix} = M^{-1}{}_d \begin{pmatrix} X3'' \\ Y3'' \\ Z3'' \end{pmatrix} + \left( M^{-1}{}_p - M^{-1}{}_d \right) \begin{pmatrix} X3''Y3'' \\ Y3''Y3'' \\ Z3''Y3'' \end{pmatrix}$$

This equation cannot be resolved in closed form for the second decoded color coordinates. Therefore, this equation is reformulated as follows to compute a first set of decoded color coordinates X3",Y3",Z3" :

$$\begin{pmatrix} X3'' \\ Y3'' \\ Z3'' \end{pmatrix} = M_d \begin{pmatrix} R' \\ G' \\ B' \end{pmatrix} + \left(1 - M_d M^{-1}{}_p\right) \begin{pmatrix} X_0 Y_0 \\ Y_0 Y_0 \\ Z_0 Y_0 \end{pmatrix} \quad \text{with} \quad \begin{pmatrix} X_0 \\ Y_0 \\ Z_0 \end{pmatrix} = \begin{pmatrix} X1'' \\ Y1'' \\ Z1'' \end{pmatrix},$$ where X1", Y1", Z1" are provided by the first step.

A second iteration is then implemented using the same reformulated equation to compute a second set of decoded color coordinates X4",Y4",Z4", but with $X_0,Y_0,Z_0$ respectively equal to the decoded color coordinates X3",Y3",Z3" computed in the previous iteration.

Such iterations are repeated until the decoded color coordinates computed in an iteration differ from those computed in the previous iteration by values inferior to a predetermined threshold.

As the end of those iterations, i.e., at the end of the second step of this embodiment, a final set of decoded color coordinates is obtained, that represents the color in the CIE-XYZ color space. This set can then be transformed in a usual manner as described above to control a display device such that this color is displayed on the screen of this device.

It should be noted that, in both embodiments above, the decoding method comprises, for each color to decode, the deduction of the decoded colors coordinates from a same equation stating that encoded colors coordinates are a linear combination:

of a first set of device-dependent color coordinates with a first weight, which results from the application of the inverse of the first linear model $M_p$ modelling the first virtual display device to the decoded colors coordinates, and of a second set of device-dependent color coordinates with a second weight, which results from the application of the inverse of the second linear model $M_d$ modelling the second virtual display device to the same decoded colors coordinates,

wherein the first weight is proportional to the luminance of this color, and wherein the sum of the first weight and of the second weight is equal to 1.

In order to render on a display device a color of the image represented by a final set of decoded color coordinates X,Y,Z as obtained above, a matrix $M_R$ modeling this display device can be used to compute color coordinates $R_R,G_R,B_R$ adapted to control this display device such that it displays this color. Such a computation is performed according to the equation:

$$\begin{bmatrix} R_R \\ G_R \\ B_R \end{bmatrix} = M^{-1}{}_R \begin{bmatrix} X \\ Y \\ Z \end{bmatrix}$$

As an advantage of the encoding method used to get the encoded color coordinates R',G',B' as described above, it should be emphasized that, for such a decoding of encoded color coordinates representing a color, the value of luminance of this color does not need to be received or stored together with metadata defining the first and second virtual display devices.

All embodiments and variants of the present invention are intended to encompass both structural and functional equivalents thereof. Additionally, it is intended that such equivalents include both currently known equivalents as well as equivalents developed in the future, i.e., any elements developed that perform the same function, regardless of structure.

Although the illustrative embodiments of the invention have been described herein with reference to the accompanying drawings, it is to be understood that the present invention is not limited to those precise embodiments, and that various changes and modifications may be effected therein by one of ordinary skill in the pertinent art without departing from the invention. All such changes and modifications are intended to be included within the scope of the present invention as set forth in the appended claims. The present invention as claimed therefore includes variations from the particular examples and preferred embodiments described herein, as will be apparent to one of skill in the art.

While some of the specific embodiments may be described and claimed separately, it is understood that the various features of embodiments described and claimed herein may be used in combination. Reference numerals appearing in the claims are by way of illustration only and shall have no limiting effect on the scope of the claims.

## Claims

1.  Method of encoding colors of an image of a scene into encoded colors (R',G',B'),
    wherein said scene has at least two different illuminations including a first illumination of high luminance and a second illumination of lower luminance, said method comprising, for each of said colors:

    - applying to three color coordinates (X,Y,Z) representing said color in a device independent color space the inverse of a first linear model ($M_p$) modelling a first virtual display device corresponding to the first illumination, resulting in a first set of device-dependent color coordinates ($R_p,G_p,B_p$),
    - applying to the three color coordinates (X,Y,Z) representing said color in said device independent color space the inverse of a second linear model ($M_d$) modelling a second virtual display device corresponding to the second illumination, resulting in a second set of device-dependent color coordinates ($R_d,G_d,B_d$),
    - computing a third set of device-dependent color coordinates (R',G',B') by linearly combining said first set of device-dependent color coordinates ($R_p,G_p,B_p$) with a first weight (w) and said second set of device-dependent color coordinates ($R_d,G_d,B_d$) with a second weight, wherein said first weight (w) is proportional to the luminance (Y) of said color.

2.  Method of encoding according to claim 1, wherein said first virtual display device is defined as having a first white and a first set of primaries, said first white and said primaries corresponding to colors reflected by objects of said scene under said first illumination, and wherein said second virtual display device is defined as having a second white and a second set of primaries, said second white and said primaries corresponding to colors reflected by objects of said scene under said second illumination.

3.  Method of encoding according to claim 1, wherein said first virtual display device is defined such that its color gamut includes most colors of the scene under the first illumination with some of these colors limiting this color gamut, and wherein said second virtual display device is defined such that its color gamut includes most colors of the scene under the second illumination, with some of these colors limiting this color gamut.

4.  Method of encoding according to any one of claims 1 to 3, wherein the sum of the first weight and of the second weight is equal to 1.

5.  Method of encoding according to any one of claims 1 to 4, wherein each of said colors is captured by a camera as a set of camera-dependent color coordinates (R,G,B), and wherein the three color coordinates (X,Y,Z) representing each of said colors in the device-independent color space are obtained by applying to said camera-dependent color coordinates (R,G,B) the inverse of a model ($M_C$) modelling said camera.

6. Method of encoding according to any one of claims 1 to 5, comprising varying the range of values of said device-dependent color coordinates of said third set and then data compressing said values.

7. Method of encoding according to any one of claims 1 to 6, wherein the ratio of said high luminance of the first illumination over said lower luminance of the second illumination is superior to 100.

8. Method of encoding according to any one of claims 1 to 7, wherein said first illumination corresponds to a peak illumination and wherein said second illumination corresponds to a diffuse illumination.

9. Method of decoding encoded colors coordinates (R',G',B') representing colors of an image of a scene into decoded colors coordinates representing the same colors in a device independent color space, wherein said scene has at least two different illuminations including a first illumination of high luminance and a second illumination of lower luminance, said method comprising, for each of said colors, main computing said decoded colors coordinates from an equation stating that encoded colors coordinates are a linear combination:

of a first set of device-dependent color coordinates with a first weight, which results from the application of the inverse of a first linear model ($M_p$) modelling a first virtual display device corresponding to the first illumination to said decoded colors coordinates, and
of a second set of device-dependent color coordinates with a second weight, which results from the application of the inverse of a second linear model ($M_d$) modelling a second virtual display device corresponding to the second illumination to said decoded colors coordinates,
wherein said first weight (w) is proportional to the luminance (Y) of said color.

10. Method of decoding according to claim 9, wherein said first virtual display device is defined as having a first white and a first set of primaries, said first white and said primaries corresponding to colors reflected by objects of said scene under said first illumination, and wherein said second virtual display device is defined as having a second white and a second set of primaries, said second white and said primaries corresponding to colors reflected by objects of said scene under said second illumination.

11. Method of decoding according to claim 9, wherein said first virtual display device is defined such that its color gamut includes most colors of the scene under the first illumination with some of these colors limiting this color gamut, and wherein said second virtual display device is defined such that its color gamut includes most colors of the scene under the second illumination, with some of these colors limiting this color gamut.

12. Encoder for encoding colors of an image of a scene into encoded colors (R',G',B'), wherein said scene has at least two different illuminations including a first illumination of high luminance and a second illumination of lower luminance, said encoder comprising at least one processing unit configured for:

- applying to three color coordinates (X,Y,Z) representing each of said colors in a device independent color space the inverse of a first linear model ($M_p$) modelling a first virtual display device corresponding to the first illumination, resulting in a first set of device-dependent color coordinates ($R_p,G_p,B_p$),
- applying to three color coordinates (X,Y,Z) representing said color in said device independent color space the inverse of a second linear model ($M_d$) modelling a second virtual display device corresponding to the second illumination, resulting in a second set of device-dependent color coordinates ($R_d,G_d,B_d$),
- computing a third set of device-dependent color coordinates (R',G',B') by linearly combining said first set of device-dependent color coordinates ($R_p,G_p,B_p$) with a first weight (w) and said second set of device-dependent color coordinates ($R_d,G_d,B_d$) with a second weight, wherein said first weight (w) is proportional to the luminance (Y) of said color.

13. Encoder according to claim 12, wherein said first virtual display device is defined as having a first white and a first set of primaries, said first white and said primaries corresponding to colors reflected by objects of said scene under said first illumination, and wherein said second virtual display device is defined as having a second white and a second set of primaries, said second white and said primaries corresponding to colors reflected by objects of said scene under said second illumination.

**14.** Encoder according to claim 12, wherein said first virtual display device is defined such that its color gamut includes most colors of the scene under the first illumination with some of these colors limiting this color gamut, and wherein said second virtual display device is defined such that its color gamut includes most colors of the scene under the second illumination, with some of these colors limiting this color gamut.

**15.** A computer readable storage medium comprising stored instructions that when executed by at least one processing unit performs the method of any one of claims 1 to 11.

**Patentansprüche**

**1.** Verfahren zum Codieren von Farben eines Bilds einer Szene in codierte Farben (R', G', B'),
wobei die Szene mindestens zwei unterschiedliche Beleuchtungen einschließlich einer ersten Beleuchtung mit hoher Farbdichte und einer zweiten Beleuchtung mit niedrigerer Farbdichte aufweist, wobei das Verfahren für jede der Farben umfasst:

- Anwenden des Inversen eines ersten linearen Modells ($M_p$), das eine erste virtuelle Anzeigevorrichtung, die der ersten Beleuchtung entspricht, modelliert, auf drei Farbkoordinaten (X, Y, Z), die die Farbe in einem vorrichtungsunabhängigen Farbraum repräsentieren, was zu einer ersten Menge vorrichtungsabhängiger Farbkoordinaten ($R_p$, $G_p$, $B_p$) führt,
- Anwenden des Inversen eines zweiten linearen Modells ($M_d$), das eine zweite virtuelle Anzeigevorrichtung, die der zweiten Beleuchtung entspricht, modelliert, auf die drei Farbkoordinaten (X, Y, Z), die die Farbe in dem vorrichtungsunabhängigen Farbraum repräsentieren, was zu einer zweiten Menge vorrichtungsabhängiger Farbkoordinaten ($R_d$, $G_d$, $B_d$) führt,
- Berechnen einer dritten Menge vorrichtungsabhängiger Farbkoordinaten (R', G', B') durch Linearkombinieren der ersten Menge vorrichtungsabhängiger Farbkoordinaten ($R_p$, $G_p$, $B_p$) mit einem ersten Gewicht (w) und der zweiten Menge vorrichtungsabhängiger Farbkoordinaten ($R_d$, $G_d$, $B_d$) mit einem zweiten Gewicht, wobei das erste Gewicht (w) proportional zu der Farbdichte (Y) der Farbe ist.

**2.** Verfahren zum Codieren nach Anspruch 1, wobei die erste virtuelle Anzeigevorrichtung in der Weise definiert ist, dass sie ein erstes Weiß und eine erste Menge von Primärfarben aufweist, wobei das erste Weiß und die Primärfarben Farben entsprechen, die durch Objekte der Szene gemäß der ersten Beleuchtung reflektiert werden, und wobei die zweite virtuelle Anzeigevorrichtung in der Weise definiert ist, dass sie ein zweites Weiß und eine zweite Menge von Primärfarben aufweist, wobei das zweite Weiß und die Primärfarben Farben entsprechen, die gemäß der zweiten Beleuchtung durch Objekte der Szene reflektiert werden.

**3.** Verfahren zum Codieren nach Anspruch 1, wobei die erste virtuelle Anzeigevorrichtung in der Weise definiert ist, dass ihre Farbpalette die meisten Farben der Szene gemäß der ersten Beleuchtung enthält, wobei einige dieser Farben diese Farbpalette begrenzen, und wobei die zweite virtuelle Anzeigevorrichtung in der Weise definiert ist, dass ihre Farbpalette die meisten Farben der Szene gemäß der zweiten Beleuchtung enthält, wobei einige dieser Farben diese Farbpalette begrenzen.

**4.** Verfahren zum Codieren nach einem der Ansprüche 1 bis 3, wobei die Summe des ersten Gewichts und des zweiten Gewichts gleich 1 ist.

**5.** Verfahren zum Codieren nach einem der Ansprüche 1 bis 4, wobei jede der Farben durch eine Kamera als eine Menge kameraabhängiger Farbkoordinaten (R, G, B) erfasst wird und wobei die drei Farbkoordinaten (X, Y, Z), die jede der Farben in dem vorrichtungsunabhängigen Farbraum repräsentieren, durch Anwenden des Inversen eines Modells ($M_C$), das die Kamera modelliert, auf die kameraabhängigen Farbkoordinaten (R, G, B) erhalten werden.

**6.** Verfahren zum Codieren nach einem der Ansprüche 1 bis 5, wobei das Verfahren das Ändern des Bereichs von Werten der vorrichtungsabhängigen Farbkoordinaten der dritten Menge und daraufhin das Komprimieren der Werte umfasst.

**7.** Verfahren zum Codieren nach einem der Ansprüche 1 bis 6, wobei das Verhältnis der hohen Farbdichte der ersten Beleuchtung gegenüber der niedrigeren Farbdichte der zweiten Beleuchtung größer als 100 ist.

**8.** Verfahren zum Codieren nach einem der Ansprüche 1 bis 7, wobei die erste Beleuchtung einer Spitzenbeleuchtung entspricht und wobei die zweite Beleuchtung einer diffusen Beleuchtung entspricht.

9. Verfahren zum Decodieren codierter Farbkoordinaten (R', G', B'), die Farben eines Bilds einer Szene repräsentieren, in decodierte Farbkoordinaten, die dieselben Farben in einem vorrichtungsunabhängigen Farbraum repräsentieren, wobei die Szene mindestens zwei unterschiedliche Beleuchtungen einschließlich einer ersten Beleuchtung mit hoher Farbdichte und einer zweiten Beleuchtung mit niedrigerer Farbdichte aufweist, wobei das Verfahren für jede der Farben das hauptsächliche Berechnen der decodierten Farbkoordinaten aus einer Gleichung umfasst, die besagt, dass codierte Farbkoordinaten eine Linearkombination sind:

einer ersten Menge vorrichtungsabhängiger Farbkoordinaten mit einem ersten Gewicht, das sich aus der Anwendung des Inversen eines ersten linearen Modells ($M_p$), das eine erste virtuelle Anzeigevorrichtung, die der ersten Beleuchtung entspricht, modelliert, auf die decodierten Farbkoordinaten ergibt, und
einer zweiten Menge vorrichtungsabhängiger Farbkoordinaten mit einem zweiten Gewicht, das sich aus der Anwendung des Inversen eines zweiten linearen Modells ($M_d$), das eine zweite virtuelle Anzeigevorrichtung, die der zweiten Beleuchtung entspricht, modelliert, auf die decodierten Farbkoordinaten ergibt, wobei das erste Gewicht (w) proportional zu der Farbdichte (Y) der Farbe ist.

10. Verfahren zum Decodieren nach Anspruch 9, wobei die erste virtuelle Anzeigevorrichtung in der Weise definiert ist, dass sie ein erstes Weiß und eine erste Menge von Primärfarben aufweist, wobei das erste Weiß und die Primärfarben Farben entsprechen, die durch Objekte der Szene gemäß der ersten Beleuchtung reflektiert werden, und wobei die zweite virtuelle Anzeigevorrichtung in der Weise definiert ist, dass sie ein zweites Weiß und eine zweite Menge von Primärfarben aufweist, wobei das zweite Weiß und die Primärfarben Farben entsprechen, die gemäß der zweiten Beleuchtung durch Objekte der Szene reflektiert werden.

11. Verfahren zum Decodieren nach Anspruch 9, wobei die erste virtuelle Anzeigevorrichtung in der Weise definiert ist, dass ihre Farbpalette die meisten Farben der Szene gemäß der ersten Beleuchtung enthält, wobei einige dieser Farben diese Farbpalette begrenzen, und wobei die zweite virtuelle Anzeigevorrichtung in der Weise definiert ist, dass ihre Farbpalette die meisten Farben der Szene gemäß der zweiten Beleuchtung enthält, wobei einige dieser Farben diese Farbpalette begrenzen.

12. Codierer zum Codieren von Farben eines Bilds einer Szene in codierte Farben (R', G', B'), wobei die Szene mindestens zwei unterschiedliche Beleuchtungen einschließlich einer ersten Beleuchtung mit hoher Farbdichte und einer zweiten Beleuchtung mit niedrigerer Farbdichte aufweist, wobei der Codierer mindestens eine Verarbeitungseinheit umfasst, die konfiguriert ist zum:

- Anwenden des Inversen eines ersten linearen Modells ($M_p$), das eine erste virtuelle Anzeigevorrichtung, die der ersten Beleuchtung entspricht, modelliert, auf drei Farbkoordinaten (X, Y, Z), die jede der Farben in einem vorrichtungsunabhängigen Farbraum repräsentieren, was zu einer ersten Menge vorrichtungsabhängiger Farbkoordinaten ($R_p$, $G_p$, $B_p$) führt,
- Anwenden des Inversen eines zweiten linearen Modells ($M_d$), das eine zweite virtuelle Anzeigevorrichtung, die der zweiten Beleuchtung entspricht, modelliert, auf die drei Farbkoordinaten (X, Y, Z), die die Farbe in dem vorrichtungsunabhängigen Farbraum repräsentieren, was zu einer zweiten Menge vorrichtungsabhängiger Farbkoordinaten ($R_d$, $G_d$, $B_d$) führt,
- Berechnen einer dritten Menge vorrichtungsabhängiger Farbkoordinaten (R', G', B') durch Linearkombinieren der ersten Menge vorrichtungsabhängiger Farbkoordinaten ($R_p$, $G_p$, $B_p$) mit einem ersten Gewicht (w) und der zweiten Menge vorrichtungsabhängiger Farbkoordinaten ($R_d$, $G_d$, $B_d$) mit einem zweiten Gewicht, wobei das erste Gewicht (w) proportional zu der Farbdichte (Y) der Farbe ist.

13. Codierer nach Anspruch 12, wobei die erste virtuelle Anzeigevorrichtung in der Weise definiert ist, dass sie ein erstes Weiß und eine erste Menge von Primärfarben aufweist, wobei das erste Weiß und die Primärfarben Farben entsprechen, die durch Objekte der Szene gemäß der ersten Beleuchtung reflektiert werden, und wobei die zweite virtuelle Anzeigevorrichtung in der Weise definiert ist, dass sie ein zweites Weiß und eine zweite Menge von Primärfarben aufweist, wobei das zweite Weiß und die Primärfarben Farben entsprechen, die gemäß der zweiten Beleuchtung durch Objekte der Szene reflektiert werden.

14. Codierer nach Anspruch 12, wobei die erste virtuelle Anzeigevorrichtung in der Weise definiert ist, dass ihre Farbpalette die meisten Farben der Szene gemäß der ersten Beleuchtung enthält, wobei einige dieser Farben diese Farbpalette begrenzen, und wobei die zweite virtuelle Anzeigevorrichtung in der Weise definiert ist, dass ihre Farbpalette die meisten Farben der Szene gemäß der zweiten Beleuchtung enthält, wobei einige dieser Farben diese Farbpalette begrenzen.

15. Computerlesbares Speichermedium, das gespeicherte Anweisungen umfasst, die, wenn sie durch mindestens eine Verarbeitungseinheit ausgeführt werden, das Verfahren nach einem der Ansprüche 1 bis 11 ausführen.

**Revendications**

1. Procédé de codage de couleurs d'une image d'une scène en couleurs codées (R', G', B'), dans lequel ladite scène comporte au moins deux éclairages différents incluant un premier éclairage à luminance élevée et un deuxième éclairage à luminance inférieure, ledit procédé comprenant, pour chacune desdites couleurs :

   - l'application à trois coordonnées de couleur (X, Y, Z) représentant ladite couleur dans un espace de couleur indépendant du dispositif de l'inverse d'un premier modèle linéaire ($M_p$) modélisant un premier dispositif d'affichage virtuel correspondant au premier éclairage, produisant un premier ensemble de coordonnées de couleur ($R_p$, $G_p$, $B_p$) dépendantes du dispositif,
   - l'application aux trois coordonnées de couleur (X, Y, Z) représentant ladite couleur dans ledit espace de couleur indépendant du dispositif de l'inverse d'un deuxième modèle linéaire ($M_d$) modélisant un deuxième dispositif d'affichage virtuel correspondant au deuxième éclairage, produisant un deuxième ensemble de coordonnées de couleur ($R_d$, $G_d$, $B_d$) dépendantes du dispositif,
   - le calcul d'un troisième ensemble de coordonnées de couleur (R', G', B') dépendantes du dispositif par la combinaison linéaire dudit premier ensemble de coordonnées de couleur ($R_p$, $G_p$, $B_p$) dépendantes du dispositif et d'une première pondération (w) et dudit deuxième ensemble de coordonnées de couleur ($R_d$, $G_d$, $B_d$) dépendantes du dispositif et d'une deuxième pondération, où ladite première pondération (w) est proportionnelle à la luminance (Y) de ladite couleur.

2. Procédé de codage selon la revendication 1, dans lequel ledit premier dispositif d'affichage virtuel est défini comme ayant un premier blanc et un premier ensemble de couleurs primaires, ledit premier blanc et lesdites couleurs primaires correspondant à des couleurs réfléchies par des objets de ladite scène sous ledit premier éclairage, et dans lequel ledit deuxième dispositif d'affichage virtuel est défini comme ayant un deuxième blanc et un deuxième ensemble de couleurs primaires, ledit deuxième blanc et lesdites couleurs primaires correspondant à des couleurs réfléchies par des objets de ladite scène sous ledit deuxième éclairage.

3. Procédé de codage selon la revendication 1, dans lequel ledit premier dispositif d'affichage virtuel est défini de sorte que sa gamme de couleurs inclue la plupart des couleurs de la scène sous le premier éclairage, certaines de ces couleurs limitant cette gamme de couleurs, et dans lequel ledit deuxième dispositif d'affichage virtuel est défini de sorte que sa gamme de couleurs inclue la plupart des couleurs de la scène sous le deuxième éclairage, certaines de ces couleurs limitant cette gamme de couleurs.

4. Procédé de codage selon l'une quelconque des revendications 1 à 3, dans lequel la somme de la première pondération et de la deuxième pondération est égale à 1.

5. Procédé de codage selon l'une quelconque des revendications 1 à 4, dans lequel chacune desdites couleurs est capturée par une caméra comme un ensemble de coordonnées de couleur (R, G, B) dépendantes de la caméra, et dans lequel les trois coordonnées de couleur (X, Y, Z) représentant chacune desdites couleurs dans l'espace de couleur indépendant du dispositif sont obtenues en appliquant auxdites coordonnées de couleur (R, G, B) dépendantes de la caméra l'inverse d'un modèle ($M_c$) modélisant ladite caméra.

6. Procédé de codage selon l'une quelconque des revendications 1 à 5, comprenant la variation de la plage de valeurs desdites coordonnées de couleur dépendantes du dispositif dudit troisième ensemble, puis la compression des données desdites valeurs.

7. Procédé de codage selon l'une quelconque des revendications 1 à 6, dans lequel le rapport entre ladite luminance élevée dudit premier éclairage et ladite luminance inférieure dudit deuxième éclairage est supérieur à 100.

8. Procédé de codage selon l'une quelconque des revendications 1 à 7, dans lequel ledit premier éclairage correspond à un éclairage de crête et dans lequel ledit deuxième éclairage correspond à un éclairage diffus.

9. Procédé de décodage de coordonnées de couleur (R', G', B') codées représentant des couleurs d'une image d'une scène en coordonnées de couleur décodées représentant les mêmes couleurs dans un espace de couleur indépendant du dispositif,
dans lequel ladite scène comporte au moins deux éclairages différents incluant un premier éclairage à luminance élevée et un deuxième éclairage à luminance inférieure, ledit procédé comprenant, pour chacune desdites couleurs, un calcul principal desdites coordonnées de couleur décodées à partir d'une équation selon laquelle les coordonnées de couleur codées sont une combinaison linéaire :

d'un premier ensemble de coordonnées de couleur dépendantes du dispositif et
d'une première pondération, qui résulte de l'application de l'inverse d'un premier modèle linéaire ($M_p$) modélisant un premier dispositif d'affichage virtuel correspondant au premier éclairage auxdites coordonnées de couleur décodées, et d'un deuxième ensemble de coordonnées de couleur dépendantes du dispositif et d'une deuxième pondération, qui résulte de l'application de l'inverse d'un deuxième modèle linéaire ($M_d$) modélisant un deuxième dispositif d'affichage virtuel correspondant au deuxième éclairage auxdites coordonnées de couleur décodées, dans lequel ladite première pondération (w) est proportionnelle à la luminance (Y) de ladite couleur.

10. Procédé de décodage selon la revendication 9, dans lequel ledit premier dispositif d'affichage virtuel est défini comme ayant un premier blanc et un premier ensemble de couleurs primaires, ledit premier blanc et lesdites couleurs primaires correspondant à des couleurs réfléchies par des objets de ladite scène sous ledit premier éclairage, et dans lequel ledit deuxième dispositif d'affichage virtuel est défini comme ayant un deuxième blanc et un deuxième ensemble de couleurs primaires, ledit deuxième blanc et lesdites couleurs primaires correspondant à des couleurs réfléchies par des objets de ladite scène sous ledit deuxième éclairage.

11. Procédé de décodage selon la revendication 9, dans lequel ledit premier dispositif d'affichage virtuel est défini de sorte que sa gamme de couleurs inclue la plupart des couleurs de la scène sous le premier éclairage, certaines de ces couleurs limitant cette gamme de couleurs, et dans lequel ledit deuxième dispositif d'affichage virtuel est défini de sorte que sa gamme de couleurs inclue la plupart des couleurs de la scène sous le deuxième éclairage, certaines de ces couleurs limitant cette gamme de couleurs.

12. Codeur pour coder des couleurs d'une image d'une scène en couleurs codées (R', G', B'), dans lequel ladite scène comporte au moins deux éclairages différents incluant un premier éclairage à luminance élevée et un deuxième éclairage à luminance inférieure, ledit codeur comprenant au moins une unité de traitement configurée pour :

- appliquer à trois coordonnées de couleur (X, Y, Z) représentant chacune desdites couleurs d'un espace de couleur indépendant du dispositif l'inverse d'un premier modèle linéaire ($M_p$) modélisant un premier dispositif d'affichage virtuel correspondant au premier éclairage, produisant un premier ensemble de coordonnées de couleur ($R_p$, $G_p$, $B_p$), dépendantes du dispositif,
- appliquer aux trois coordonnées de couleur (X, Y, Z) représentant ladite couleur dans ledit espace de couleur indépendant du dispositif l'inverse d'un deuxième modèle linéaire ($M_d$) modélisant un deuxième dispositif d'affichage virtuel correspondant au deuxième éclairage, produisant un deuxième ensemble de coordonnées de couleur ($R_d$, $G_d$, $B_d$) dépendantes du dispositif,
- calculer un troisième ensemble de coordonnées de couleur (R', G', B') dépendantes du dispositif par la combinaison linéaire dudit premier ensemble de coordonnées de couleur ($R_p$, $G_p$, $B_p$) dépendantes du dispositif et d'une première pondération (w) et dudit deuxième ensemble de coordonnées de couleur ($R_d$, $G_d$, $B_d$) dépendantes du dispositif et d'une deuxième pondération, où ladite première pondération (w) est proportionnelle à la luminance (Y) de ladite couleur

13. Codeur selon la revendication 12, dans lequel ledit premier dispositif d'affichage virtuel est défini comme ayant un premier blanc et un premier ensemble de couleurs primaires, ledit premier blanc et lesdites couleurs primaires correspondant à des couleurs réfléchies par des objets de ladite scène sous ledit premier éclairage, et dans lequel ledit deuxième dispositif d'affichage virtuel est défini comme ayant un deuxième blanc et un deuxième ensemble de couleurs primaires, ledit deuxième blanc et lesdites couleurs primaires correspondant à des couleurs réfléchies par des objets de ladite scène sous ledit deuxième éclairage.

14. Codeur selon la revendication 12, dans lequel ledit premier dispositif d'affichage virtuel est défini de sorte que sa gamme de couleurs inclue la plupart des couleurs de la scène sous le premier éclairage, certaines de ces couleurs limitant cette gamme de couleurs, et dans lequel ledit deuxième dispositif d'affichage virtuel est défini de sorte que sa gamme de couleurs inclue la plupart des couleurs de la scène sous le deuxième éclairage, certaines de ces couleurs limitant cette gamme de couleurs.

**15.** Support de stockage lisible par ordinateur sur lequel sont stockées des instructions stockées qui, lorsqu'elles sont exécutées par au moins une unité de traitement, exécutent le procédé selon l'une quelconque des revendications 1 à 11.

Incident light → Camera sensor → RGB

**Fig.1**

XYZ → Camera model → RGB

**Fig.2**

Illumination → Diffuse reflection process → Linear combination → RGB

Illumination → Specular reflection process → Linear combination

**Fig.3**

**Fig.4**

**Fig.5**

**Fig.6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005213128 A
- US 2014184765 A
- US 2011122284 A
- WO 2005022442 A

### Non-patent literature cited in the description

- **J. STAUDER et al.** Extension of colour gamut in digital acquisition and colour correction. *Conference for Visual Media Production,* 12 November 2009
- **YANG et al.** Separating Specular and Diffuse Reflection Components in the HSI Color Space. *IEEE Computer Vision Workshops (ICCVW),* 2013
- **MARK BRADY et al.** Camera calibration for natural image studies and vision research. *Journal of Optical Society of America A Opt. Image Sci Vis,* 2009, vol. 26, 30-42